# EUROPÄISCHE PATENTANMELDUNG

(11) **EP 0 564 992 A2**
(43) Veröffentlichungstag der Anmeldung: **13.10.1993**
(21) Anmeldenummer: 93105469.6
(22) Anmeldetag: 02.04.1993
(51) Int. Cl.: B01D 45/12, B04C 5/081, B01D 50/00, B04C 5/13, B04C 5/181, B04C 9/00

(54) **Filteranlage**

(30) Priorität: 10.04.1992 DE 9205057 U
(71) Anmelder: H KRANTZ-TKT GmbH, D-51465 Bergisch Gladbach (DE)
(72) Erfinder: Gores, Stefan, Dipl.-Ing., W-5100 Aachen (DE)
(74) Vertreter: Bauer, Hubert, Dipl.-Ing.

(57) **Zusammenfassung**

Die Filteranlage dient zum Reinigen eines mit Feststoffpartikeln beladenen gasförmigen Mediums. An einer Eintrittsöffnung (1) eines Anlagengehäuses ist ein darin integrierter Zyklon als Vorabscheider angeschlossen. Diesem ist in Strömungsrichtung ein Feinfilter (7) nachgeschaltet. Durch die Wahl bestimmter Kenngrößen für die Verhältnisse:
Durchmesser des Tauchrohres (5) : Außendurchmesser des Zyklons,
Höhe des Zyklons : Außendurchmesser des Zyklons,
Eindringtiefe des Tauchrohres (5) : Höhe des Querschnitts der Eintrittsöffnung (1)
und
Höhe des zylindrischen Mantels : Zyklongesamtmantelhöhe soll bei einem relativ hohen Abscheidegrad ein möglichst niedriger Druckverlust verursacht und der Platzbedarf so reduziert werden, daß der Zyklon komplikationslos in das Anlagengehäuse gemeinsam mit dem Feinfilter (7) integrierbar ist. Weiterhin sollen durch einen möglichst spitzen Neigungswinkel des Zyklons Ablagerungen von Staubparikeln im Zyklon vermieden werden.

## Beschreibung

Die Erfindung betrifft eine Filteranlage zum Reinigen eines mit Feststoffpartikeln beladenen gasförmigen Mediums, wobei die Anlage aus einem Gehäuse mit einer Eintrittsöffnung für das zu reinigende und einer Austrittsöffnung für das gereinigte gasförmige Medium und einer Austragsöffnung für die vom gasförmigen Medium abgetrennten Feststoffpartikel besteht. An die Eintrittsöffnung ist ein im Gehäuse integrierter Zyklon als Vorabscheider angeschlossen, dem in Strömungsrichtung des Mediums ein gleichfalls im Gehäuse integriertes Feinfilter nachgeschaltet ist, dessen Austrittsseite mit der Austrittsöffnung verbunden ist.

Aus der DZ "WLB ACHEMA-REPORT 1991, S. 60" ist bereits eine als Schlauchfilteranlage ausgebildete Filteranlage bekannt, der als Fliehkraftabscheider Hochleistungszyklone vorgeschaltet sind, um insbesondere zu verhindern, daß in den Schlauchfiltern Staubbrände auftreten.

Aus DZ "Staub - Reinhaltung der Luft 51 (1991) S. 341-343" ist auch bereits eine zentrale Asbest-Entsorgungsanlage bekannt, wobei ein Vorabscheider und ein Hauptfilter in einem Gehäuse integriert sind.

Der Erfindung liegt die Aufgabe zugrunde, eine Filteranlage der eingangs beschriebenen Art mit einem Zyklon als Vorabscheider auszustatten, der bei einem relativ hohen Abscheidegrad einen möglichst niedrigen Druckverlust verursacht und dessen Platzbedarf so reduziert ist, daß er komplikationslos in einem gemeinsamen Gehäuse mit einem Feinfilter integrierbar ist. Des weiteren soll der Zyklon einen möglichst spitzen Neigungswinkel zur Senkrechten aufweisen, um die Ablagerung von Staubpartikeln zu vermeiden. Schließlich soll die Abreinigung des Feinfilters durch die Integration des Zyklons innerhalb des Gehäuses der Gesamtanlage nicht behindert werden.

Zur Lösung dieser Aufgabe wird von einer Filteranlage der im Oberbegriff des Anspruchs 1 genannten Art ausgegangen, welche erfindungsgemäß die in seinem kennzeichnenden Teil angegebenen Merkmale aufweist.

Die erfindungsgemäße Auswahl der geometrischen Größen des Zyklons berücksichtigt nicht nur die konstruktiven Gegebenheiten des Feinfilters, sondern stellt auch sicher, daß der zyklongängige Feinstaub, welcher vom Feinfilter abgetrennt wird, nach dessen Abreinigung durch den Zyklon hindurch in einen Staubsammelbehälter überführt und darin festgehalten werden kann.

Aufgrund der vorstehenden Anforderungen ist der Tauchrohrdurchmesser dᵢ verhältnismäßig groß gewählt, obschon diese Bemessung einer guten Vorabscheidung entgegenwirkt.

Einbauten im Tauchrohr zur Rückgewinnung von Drallenergie aus der Zyklonströmung und Verbesserung der Filteranströmung sind vorzugsweise so gestaltet, daß sich bei der Abreinigung des Feinfilters möglichst wenig Staub auf die Einbauten ablagern kann.

Da sämtliche schrägen Flächen innerhalb des Gehäuses möglichst steil gestaltet werden, ergibt sich beispielsweise auch ein relativ großer sogenannter Apex-Kegel für die Abschirmung des Staubsammelbehälters. Weitere Ausgestaltungen der erfindungsgemäßen Filteranlage ergeben sich aus den Ansprüchen 2 bis 8.

Durch die erfindungsgemäße Ausbildung und deren Ausgestaltungen stellt die Gesamtanlage einen besonders wirtschaftlichen Betrieb sicher, da der Gesamtdruckverlust aus der Summe der Druckverluste von Zyklon und Feinfilter resultiert. Die gegenüber konventionellen Zyklonen beim anmeldungsgemäßen Zyklon verschlechterte Abscheideleistung hat keinen Einfluß auf die Abscheideleistung der Gesamtanlage, da der zyklongängige Feinstaub von dem nachgeschalteten, vorzugsweise als Schwebstoffilterzelle ausgebildeten Feinfilter abgeschieden wird.

Durch Versuche konnte nachgewiesen werden, daß mit einer erfindungsgemäßen Filteranlage bei einem Druckverlust durch den Zyklon von ca. 500 Pa eine Abscheideleistung von ca. 85 %, bezogen auf den Versuchsstaub Dolomitsteinmehl, erzeugt werden kann.

In der Zeichnung ist ein Ausführungsbeispiel einer erfindungsgemäßen Filteranlage schematisch dargestellt. Es zeigt:

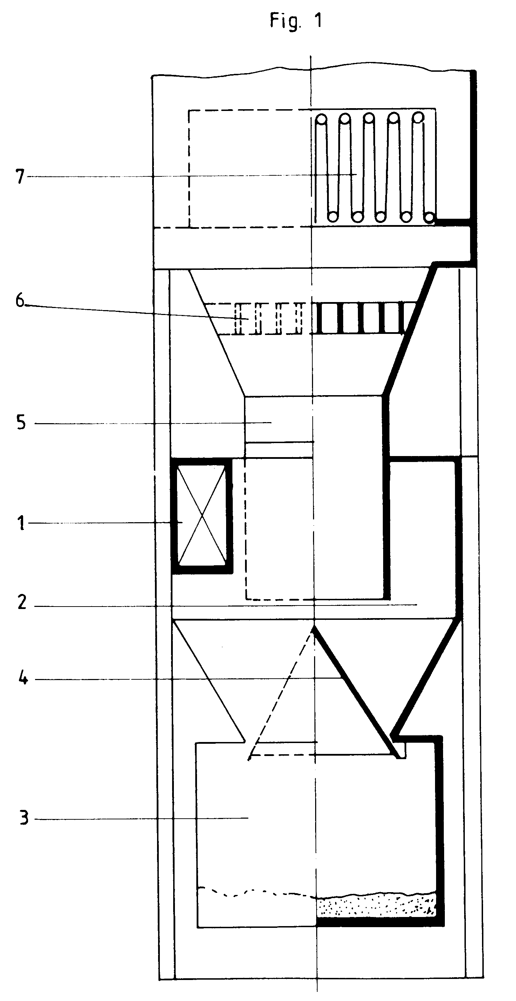

- Fig. 1: einen vertikalen Schnitt durch die Filteranlage;

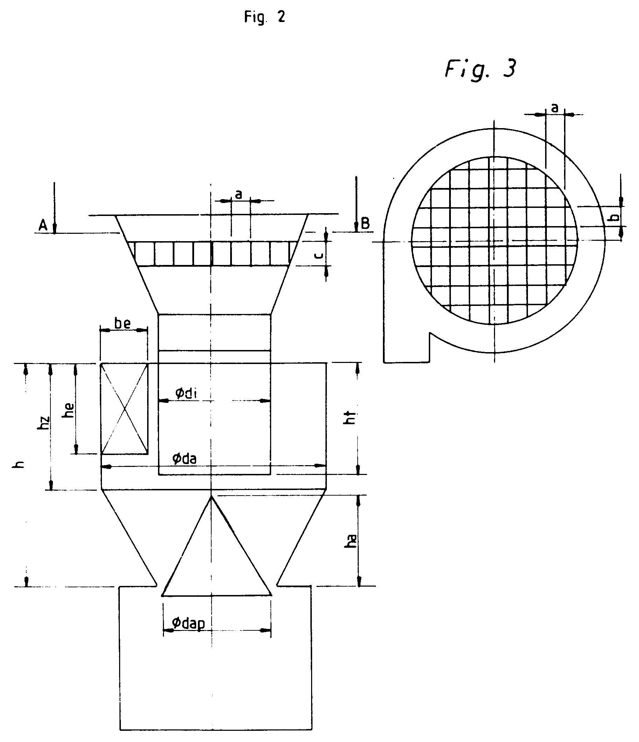

- Fig. 2: die Filteranlage gemäß Fig. 1 mit Maßlinien für die wesentlichsten Kenngrößen;
- Fig. 3: einen Schnitt nach der Linie A-B der Fig. 2.

Über eine tangentiale Eintrittsöffnung 1 gelangt das Rohgas in einen Abscheideraum 2 des Zyklons, durch den der Grobstaub abgeschieden und anschließend einem Staubsammelbehälter 3 zugeführt wird. Oberhalb des Staubsammelbehälters 3 verhindert ein Apex-Kegel 4 ein Aufwirbeln des bereits gesammelten Staubes. Der zyklongängige Feinstaub verläßt den Zyklon durch ein zentrisch angeordnetes Tauchrohr 5, passiert einen Strömungsgleichrichter 6 und wird mit Hilfe des nachgeschalteten Feinfilters 7 abgeschieden. Dieser Feinstaub wird bei der Abreinigungsphase des Feinfilters 7 durch den Zyklon hindurch ebenfalls dem Staubsammelbehälter 3 zugeführt.

Ein besonderer Vorteil liegt in der multifunktionalen Nutzung verschiedener Anlagenbauteile. So dient beispielsweise der Staubsammelbehälter 3 sowohl als Auffangbehälter dem Zyklon als auch dem Feinfilter. Die Strömnungsführung für den Gasaustritt des Zyklons bildet zugleich eine Führungsfläche für den Feinstaub, der vom Feinfilter abgetrennt wird. Der Strömungsgleichrichter stellt ein Bauteil zur Umwandlung der Drallenergie aus der Zyklonströmung dar und bewirkt gleichzeitig eine homogene Beaufschlagung des Feinfilters über dessen Anströmquerschnitt.

## Patentansprüche

1. Filteranlage zum Reinigen eines mit Feststoffpartikeln beladenen gasförmigen Mediums, bestehend aus einem Gehäuse mit einer Eintrittsöffnung für das zu reinigende und einer Austrittsöffnung für das gereinigte gasförmige Medium und einer Austragsöffnung für die vom gasförmigen Medium abgetrennten Feststoffpartikel, wobei an die Eintrittsöffnung ein im Gehäuse integrierter Zyklon als Vorabscheider angeschlossen ist, dem in Strömungsrichtung des Mediums ein gleichfalls im Gehäuse integriertes Feinfilter nachgeschaltet ist, dessen Austrittsseite mit der Austrittsöffnung verbunden ist, dadurch gekennzeichnet, daß der Zyklon folgende Kenngrößen aufweist:
a) Tauchrohrdurchmesser dᵢ : Zyklonaußendurchmesser dₐ
= 0,3 - 0,7;
b) Zyklonhöhe h : Zyklonaußendurchmesser dₐ
= 0,8 - 2,0;
c) Tauchrohreindringtiefe hₜ : Höhe des Gaseintrittsquerschnitts hₑ
= 1,0 - 1,5;
d) Höhe des zylindrischen Mantelteils h_{z} : Zyklonmantelhöhe h
= 0,2 - 1,0.

2. Filteranlage nach Anspruch 1, gekennzeichnet durch folgende Kenngrößen:
a) Tauchrohrdurchmesser dᵢ : Zyklonaußendurchmesser dₐ
= 0,4 - 0,6;
b) Zyklonhöhe h : Zyklonaußendurchmesser dₐ
= 0,9 - 1,1;
c) Tauchrohreindringtiefe hₜ : Höhe des Gaseintrittsquerschnitts hₑ
= 1,0 - 1,25;
d) Höhe des zylindrischen Mantelteils h_{z} : Zyklonmantelhöhe h
= 0,5 - 0,6.

3. Filteranlage nach Anspruch 1 oder 2, dadurch gekennzeichnet, daß das Verhältnis der Einströmfläche Aₑ zum Quadrat des Zyklonaußendurchmessers dₐ 0,05 - 0,1, vorzugsweise 0,07 - 0,09, beträgt.

4. Filteranlage nach einem der Ansprüche 1 bis 3, dadurch gekennzeichnet, daß das Verhältnis der Höhe des Gasaustrittsquerschnitts hₑ zur Breite des Gaseintrittsquerschnitts bₑ 1,5 - 2,5, vorzugsweise 1,8 - 2,2, beträgt.

5. Filteranlage nach einem der Ansprüche 1 bis 4, dadurch gekennzeichnet, daß das Verhältnis des Durchmessers einer Austragsöffnung dₐₚ zur Zyklonmantelhöhe h 0,8 - 1,2, vorzugsweise 0,9 - 1,1, beträgt.

6. Filteranlage nach einem der Ansprüche 1 bis 5, dadurch gekennzeichnet, daß das Verhältnis der Apex-Kegelhöhe hₐ zur Zyklonhöhe h 0,2 - 0,5, vorzugsweise 0,4 bis 0,5 , beträgt.

7. Filteranlage nach einem der Ansprüche 1 bis 6, dadurch gekennzeichnet, daß zwischen dem Zyklon und dem Feinfilter ein Strömungsgleichrichter mit wabenförmigen Durchtrittsöffnungen angeordnet ist, wobei das Verhältnis der Seitenlänge a zur Seitenlänge b jeder Durchtrittsöffnung 0,5 - 2,0, vorzugsweise 0,9 - 1,1, beträgt.

8. Filteranlage nach Anspruch 7, dadurch gekennzeichnet, daß das Verhältnis der Durchtrittsöffnungstiefe c zur Seitenlänge a 0,5 - 3,0, vorzugsweise 0,5 - 0,8, beträgt.
